Europäisches Patentamt

European Patent Office

Office européen des brevets

(19)

(11) Publication number: **0 196 190**
**A2**

# EUROPEAN PATENT APPLICATION

(21) Application number: **86301955.0**

(22) Date of filing: **18.03.86**

(51) Int. Cl.⁴: **H 01 M 4/38, H 01 M 10/34**

(30) Priority: **29.03.85 US 717430**

(43) Date of publication of application: **01.10.86 Bulletin 86/40**

(84) Designated Contracting States: **BE DE FR GB IT NL SE**

(71) Applicant: **THE STANDARD OIL COMPANY, 200 Public Square, 36-F-3454, Cleveland Ohio 44114-2375 (US)**

(72) Inventor: **Tenhover, Michael A., 31700 Cheswick Place, Solon Ohio 44139 (US)**
Inventor: **Harris, Jonathan H., 3705 Strandhill Rd., Shaker Hts. Ohio 44122 (US)**

(74) Representative: **Smith, Sydney et al, Elkington and Fife High Holborn House 52/54 High Holborn, London WC1V 6SH (GB)**

(54) Storage devices and amorphous metal alloy electrodes for use in alkaline environments.

(57) An electrical storage device is described which utilizes an electrode for reversibly storing hydrogen in an alkaline environment, the electrode comprising an amorphous metal alloy of the formula:

$$A_a M_b M'_c$$

wherein
A is at least one metal selected from the group consisting of Pd, Ag, Au, Hg and Pt;
M is at least one metal selected from the group consisting of Pb, Ru, Cu, Cr, Mo, Si, W, Ni, Al, Sn, Co, Fe, Zn, Cd, Ga and Mn;
M' is at least one of the elements selected from the group consisting of Ca, Mg, Ti, Y, Zr, Hf, V, Nb, Ta and the rare earths; and
wherein
a ranges from about 0.005 to about 0.80;
b ranges from zero to about 0.70; and
c ranges from about 0.08 to about 0.95.

## ENERGY STORAGE DEVICES AND

## AMORPHOUS METAL ALLOY ELECTRODES FOR USE IN ALKALINE ENVIRONMENTS

### Field of the Invention

The present invention relates to novel amorphous metal alloy electrodes and their use in energy storage devices. More specifically, the prevent invention relates to the use of amorphous metal alloy electrodes capable of reversibly storing hydrogen and their use in electrical energy storage devices.

### Background of the Invention

Shortages of fossil fuel materials in the recent past has spurred much speculation regarding the feasibility of economies based on other energy sources. One such scenario is a hydrogen-fueled economy. Hydrogen has the highest energy density per unit weight of any chemical. Many projections have been made for an economy based on this element, but the technology is not yet in place to effect such a dramatic change in the world economy. Hydrogen is, however, a technically attractive source of fuel and energy storage. It is essentially non-polluting, the major by-product of combustion being $H_2O$, and can be made from readily available and abundant raw materials.

While it is well known that hydrogen can be stored as a compressed gas or cryogenically as a liquid, other less energy-intensive and more convenient means are required for widespread utilization of hydrogen as a source of stored energy.

It is known that some metals and metal alloys are capable of storing hydrogen reversibly within their lattice. This characteristic may be exploited by exposing the metal or metal alloy to a large pressure of hydrogen, impregnating the metal or metal alloy with hydrogen and later recovering the stored hydrogen by subjecting the impregnated metal or alloy to a change in temperature or pressure. One example of a metal that is capable of reversible hydrogen storage is palladium which can absorb up to 0.6 hydrogen atoms for every palladium atom. For an example of reversible hydrogen storage alloys, see, R.L. Cohen and J.H. Wernick, "Hydrogen Storage Materials: Properties and Possibilities", Science, December 4, 1981, Vol. 214, No. 4525, pg. 1081, which reported on the ability of alloys such as $LaNi_5$ to absorb hydrogen in the gas phase.

This characteristic of reversible hydrogen storage for $LaNi_5$-type alloys was reported as also being applicable in an electrochemical environment by Bronoel et al, "A New Hydrogen Storage Electrode", International Journal of Hydrogen Energy, Vol. 1, pp. 251-254, 1976. A metal or metal alloy suitable as a hydrogen storage material may be cathodically biased relative to a suitable counter electrode and charged with hydrogen as water is decomposed. Other metal alloy systems that have been studied include TiMn-based, FeTi-based and Mg-based alloys. Although some of these crystalline materials store appreciable quantities of hydrogen, these same crystalline materials are susceptible to phase separation, hydrogen embrittlement and surface oxidation when subjected to repeated charge/discharge cycles for hydrogen storage. Phase separation occurs in crystalline alloys that are subjected to hydrogen cycling, wherein the alloy components separate and migrate throughout the alloy. In $LaNi_5$-type alloys, La migrates to the surface of the alloy, where it may rapidly become oxidized.

This problem was recently addressed in Japanese Publication 58, 163, 157 entitled "Metal Oxide-hydrogen battery". This publication describes a hydrogen storage battery having an improved $LaNi_5$ anode that is less susceptible to oxidation. This improvement comes from the use of a porous nickel layer disposed around the LaNi5 anode to reduce oxidation.

Hydrogen embrittlement occurs in crystalline alloys as hydrogen is absorbed and desorbed. Hydrogen storage proceeds from the surface of the alloy to its interior, with hydrogen atoms breaking into the interstitial site of metal matrix atoms and then expanding the lattice. As a result internal stresses may produce flaws and cracks, seriously weakening and embrittling the metal or metal alloy. Surface oxidation may occur if the hydrogen storage material is exposed to oxidative conditions in the presence of an oxidant such as $CO_2$, $H_2O$, KOH, air or oxygen. Surface oxidation interferes with the penetration of hydrogen, reducing the amount of hydrogen absorbed and the rate of absorption. Additionally, these crystalline materials generally cannot withstand corrosive environments, which environments may exist when the materials are utilized in an electrochemical reaction. An analysis of the Ti-Mn alloy system, and it attendant drawbacks, is provided in Yayama, et al., "Electrochemical Hydrogen-Storage in Ti-Mn Alloy Electrodes", Japanese Journal of Applied Physics, Vol. 22, No. 10, pp. 621-623, October, 1983.

Recently, amorphous metal alloy materials have been reported as having the ability to store hydrogen reversibly. Amorphous metal alloy materials have become of interest due to their unique combinations of mechanical, chemical and electrical properties. Amorphous metal materials have compositionally variable properties including high hardness and strength, flexibility, soft magnetic and ferroelectric properties, very high resistance to corrosion and wear, unusual alloy compositions, and high resistance to radiation damage. The unique combinations of properties possessed by amorphous metal alloy materials may be attributed to the disordered atomic structure of amorphous materials that insures that the material is chemically homogeneous and free from the extended defects that are known to limit the performance of crystalline materials.

A general discussion of hydrogen absorption by amorphous, or glassy, metal alloys was provided by G.G. Libowitz and A.J. Maeland, "Interactions of Hydrogen With Metallic Glass Alloys", Journal of the Less-Common Metals, 101, pp. 131-143, 1984.

Schroeder and Koster studied hydrogen embrittlement in Fe-Ni-B, Pd-Zr and Ni-Zr amorphous alloys ribbons, "Hydrogen Embrittlement of Metallic Glasses", Journal of Non-Crystalline Solids, 56, pp 213-218, 1983 whereas Fe-Ni-B alloys exhibited low hydrogen absorption and severe embrittlement, Pd-Zr and Ni-Z alloys could absorb up to one atom of hydrogen per metal atom and still retained some ductility.

Amorphous metal alloy systems of TiCu and ZrCu were investigated and contrasted with the hydrogen absorption properties of the corresponding crystalline intermetallic compounds by Maeland, et al., "Hydrides of Metallic Glass Alloys," Journal of the Less-Common Metals, 74, pp. 279-285, 1980. Amorphous metal alloy compositions, under similar conditions of temperature and pressure were capable of absorbing larger amounts of hydrogen than their crystalline counterparts. Maeland, et al. restricted their studies to the gaseous absorption of hydrogen in a hydrogen atmosphere. The amorphous compositions are not expected to suffer from phase separation or to become embrittled, due to their unique structure. However, these materials may not show substantial resistance to surface passivation by oxidation or to corrosion. Maeland, et al., by excluding oxygen in their system, and by working in a gaseous environment, have avoided addressing the effects of oxidation and harsh environments on the hydrogen storage amorphous metal alloys that were investigated.

A patent publication in the United Kingdom, GB 2 119 561 A to Energy Conversion Devices, Inc. describes a battery utilizing a hydrogen rechargeable anode that is an amorphous metal material. This publication examined Ti-Ni and Mg-Ni compositions as hydrogen storage anodes.

The work recited herein above is an indication of the interest that lies in the field of energy storage through the use of reversible hydrogen storage materials. However, the ability to store hydrogen is not alone sufficient to yield a useful material having widespread applications. The stability of such a material is also of paramount importance. Resistance to corrosion and oxidation must exist for continuous full-cycling of these materials. It is noted that the hydrogen batteries described in Japanese Publication 58,163,157 and U.K. Publication GB 2,119,561 A are never fully discharged during cycling, the fully discharged materials being sensitive to oxidation, and so, failure.

Thus, it becomes obvious that what is lacking in the field of reversible hydrogen storage for energy storage devices is an electrode that can reversibly store hydrogen and undergo deep cyclic discharges without becoming unstable or detrimentally affected by corrosion or oxidation.

It is therefore one object of the present invention to provide an electrode capable of reversibly storing hydrogen.

It is an additional object of the present invention to provide an electrode capable of reversibly storing hydrogen in a cyclical fashion without being impaired by surface oxidation or corrosion.

It is yet another object of the present invention to provide a hydrogen storage electrode that can be used cyclically through deep discharge cycles.

Another object of the present invention is to provide an energy storage device using a reversible hydrogen storage electrode that can cyclically be charged to high energy densities and deeply discharged.

These and other objects of the present invention will become obvious to one skilled in the art in the following description of the invention and in the appended claims.

## Summary of the Invention.

The present invention is directed toward an electrode for reversibly storing hydrogen in alkaline environments comprising an amorphous metal alloy of the formula:

$$A_a M_b M'_c$$

wherein  A is at least one metal selected from the group consisting of Pd, Ag, Hg, Au and Pt;

M is at least one metal selected from the group consisting of Pb, Ru, Cu, Cr, Mo, Si, W, Ni, Al, Sn, Co, Fe, Zn, Cd, Ga and Mn; and

M' is at least one of the elements selected from the group consisting of Ca, Mg, Ti, Y, Zr, Hf, V, Nb, Ta and the rare earths; and

wherein  a ranges from about 0.005 to about 0.80;

b ranges from zero to about 0.70;

c ranges from about 0.08 to about 0.95.

The invention also relates to an energy storage device comprising a working electrode, a counter electrode electrically isolated from said working electrodes, an alkaline electrolyte in contact with the working electrode and the counter electrode, and means for collecting electrical current therefrom; the working electrode comprising an amorphous metal alloy of the formula

$$A_a M_b M'_c$$

wherein  A is at least one metal selected from the group consisting of Pd, Ag, Au, Hg and Pt;

M is at lest one metal selected from the group consisting of Pb,

Ru, Cu, Cr, Mo, Si, W, Ni, Al, Sn, Co, Fe, Zn, Cd, Ga and Mn;

M' is at least one of the elements selected from the group consisting of Ca, Mg, Ti, Y, Zr, Hf, V, Nb, Ta and the rare earths; and

wherein   a ranges from about 0.005 to about 0.80;

b ranges from zero to about 0.70; and

c ranges from about 0.08 to about 0.95.


## Detailed Description of the Invention

In accordance with this invention there is provided a hydrogen storage electrode for use in alkaline environments having the composition:

$$A_a M_b M'_c$$

wherein   A is at least one metal selected from the group consisting of Pd, Ag, Au, Hg and Pt;

M is at lest one metal selected from the group consisting of Pb,

Ru, Cu, Cr, Mo, Si, W, Ni, Al, Sn, Co, Fe, Zn, Cd, Ga and Mn;

M' is at least one of the elements selected from the group consisting of Ca, Mg, Ti, Y, Zr, Hf, V, Nb, Ta and the rare earths; and

wherein   a ranges from about 0.005 to about 0.80;

b ranges from zero to about 0.70; and

c ranges from about 0.08 to about 0.95.

These compositions are more fully described in copending
European application, (Attorney's reference SS 4852) corresponding to USSN 717,429, entitled "Amorphous Metal Alloy Compositions for Reversible Hydrogen Storage", which application is incorporated herein by reference. Preferably A is Pd or Ag; M is at least one of the elements selected from the group consisting of Mn, Ru, Fe, Cu, Ni, Cr, Mo, Al and W; and M' is titanium, magnesium, tantalum or a combination thereof. It is expected that any of the compositions of the formula $A_a M_b M'_c$ will reversibly store hydroen under mildly alkaline conditions. Under stronger alkaline conditions, it is preferred that M include at least one of the elements Mo, Ru, Ni and Mn.

These compositions are substantially amorphous metal alloys. The term "substantially" as used herein in reference to the amorphous metal alloys indicates that the metal alloys are at least fifty percent amorphous, as indicated by X-ray diffraction analysis. Preferably, the metal alloy is at least eighty percent amorphous, and most preferably about one hundred percent amorphous, as indicated by X-ray diffraction analysis. The use of the phrase "amorphous metal alloy" herein refers to amorphous metal-containing alloys that may also comprise non-metallic elements.

As taught herein, these compositions may readily be utilized as electrodes in alkaline energy storage devices. The electrode may comprise the amorphous metal alloy compositions discussed above separately or in conjunction with a substrate. A ribbon of the amorphous metal alloy may provide a freestanding hydrogen storage electrode; packed powder of the compositions herein disclosed may provide a bulk hydrogen storage electrode; and, these compositions deposited on substrates of any configuration may provide a possible hydrogen storage electrode of any desired shape.

The electrodes taught herein may also comprise structures as described in copending European patent application (Attorney's ref: SS 4851) corresponding to USSN 717,428, entitled "Improved Amorphous Metal Alloy Compositions for Reversible Hydrogen Storage". These improved compositions are characterized in that the compositions disclosed above having the formula $A_a M_b M'_c$ are graded, having a substantial concentration of the A component of the alloy on the active surface to enhance absorption and desorption of the hydrogen.

while the remaining components of the alloy, M and M', are disposed in the interior where they function as efficient bulk hydrogen storage materials.

The electrodes may also comprise at least two layers, the outer layer comprising an amorphous metal alloy as taught above having the formula $A_a M_b M'_c$, and the inner layer/layers comprising a known bulk hydrogen storage material which may be crystalline or amorphous or a combination thereof.

These electrodes can be prepared by any of the standard techniques for fabricating such materials. With respect to fabricating amorphous metal alloy electrodes, physical and chemical methods such as electron beam deposition, ion implantation, chemical reduction, thermal decomposition, ion cluster deposition, ion plating, liquid quenching, solid state diffusion, RF and DC sputtering may be utilized to form the compositions herein. One or more methods may be combined advantageously to produce the composite-structure electrodes taught herein. The A component of the electrode may be concentrated on the surface of the electrode by first producing the desired amorphous metal alloy electrode without the A component, depositing the A component on the surface of the formed electrode as by sputtering, ion implanting or other deposition techniques, and then annealing this composition to form the desired amorphous metal alloy electrode. To insure the desired hydrogen storage properties of such an amorphous metal alloy electrode, it is intended that such an electrode be exposed to an environment wherein the temperature of the alloy does not reach or exceed its crystallization temperature.

The presence of other elements as impurities in the electrodes taught herein is not expected to seriously impair the ability of these electrodes to reversibly store hydrogen. Thus, trace impurities such as

(85-P-0440)

O, N, C, S, Se, Te, B, P, Ge, Sb, As and Ar are not expected to be seriously detrimental to the preparation and performance of these electrodes.

These electrodes are characterized by their use in alkaline environments wherein they exhibit high energy density, deep discharge ability, and resistance to degradation as by oxidation.

By high energy density is meant the electrodes ability to store a relatively high amount of hydrogen per atom of alloy and also to efficiently store a relatively high amount of energy based on the alloys' weight and volume. Known hydrogen storage electrodes have energy densities on a charge-per-weight basis of about 139 mA-hr/gram for crystalline palladium and about 1668 mA-hr/cm$^3$ on a charge-per-volume basis.

The electrodes described herein have measured energy densities of from about 200 mA-hr/gram to more than about 324 mA-hr/gram on a charge-per-weight basis and from about 1000 mA-hr/cm$^3$ to more than about 2430 mA-hr/cm$^3$ on a charge-per-volume basis.

These same electrodes, having high energy densities can also be fully discharged and recharged without significant degradation of the electrodes' capacity. By fully discharged is meant that the electrode can be discharged to the point where the cell voltage is essentially zero. This contrasts with other hydrogen electrode materials such as LaNi$_5$ and Ni$_{27}$Ti$_{73}$ that cannot be fully discharged without some passivation of the hydrogen storage electrode. Repeated charge/discharge cycles further rapidly passivate electrode materials such as Ni$_{27}$Ti$_{73}$ until they are no longer capable of storing hydrogen. The electrodes taught herein have been deeply discharged and recharged in excess of 450 cycles without showing signs of performance degradation. This compares favorably to commercial battery technology such as Ni-Cd batteries that can be charged and discharged in excess of 500 cycles.

This combination of high energy density coupled with deep discharge ability and resistance to passivation in alkaline environments makes these electrodes ideal candidates for use in energy storage devices.

Such an electrochemical device comprises a housing containing a working electrode as described hereinabove, a counter electrode electrically insulated from the working electrode and an alkaline electrolyte in contact with the working electrode and the counter electrode. This energy storage device may be electrochemically charged to store hydrogen in the working electrode and discharged to provide a source of electrons.

The electrolyte is preferably an aqueous alkaline solution such as KOH and NaOH. Upon charging, the working electrode dissociates hydrogen atoms from water molecules and stores the hydrogen atoms until a discharge of the energy storage device is initiated. Upon initiation, the stored hydrogen is released from the working electrode and allowed to combine with hydroxyl ions in the electrolyte to form water and to provide a supply of electrons.

## Brief Description of the Drawings

The invention is more fully described herein below and with reference to the accompanying Figures wherein:

Figure 1 is a schematic representation of an energy storage device in accordance with the present invention;

Figures 2A-D depict charge-discharge curves for various cycles of a known hydrogen storage electrode; and

Figures 3A-D depict charge-discharge curves for various cycles of a hydrogen storage electrode as taught herein.

(85-P-0440)
0196190

## Detailed Description of the Drawings

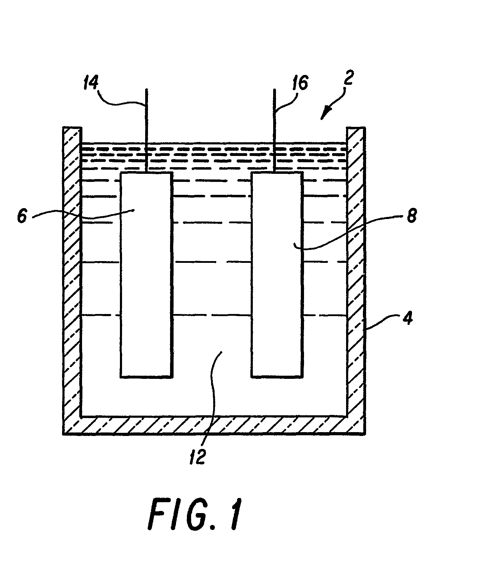

An energy storage device in accordance with the present invention is depicted in Figure 1 and identified generally by the reference number 2. This device comprises a housing 4 wherein there are disposed a working electrode 6 and a counter electrode 8, in electrically isolation from each other. The working electrode comprises an electrode in accordance with the teaching of this invention. The counter electrode is any appropriate material suitable for use in an alkaline environment and having a close electrical match to the working electrode, such as a nickel hydroxide electrode. The device 2 contains an alkaline electrolyte 12 in contact with the working electrode 6 and the counter electrode 8. Such alkaline electrolytes may be KOH or NaOH. Electrical leads 14 and 16, in electrical contact with the working electrode 6 and the counter electrode 16, respectively, are shown extending above the housing 4 and are available for connection to an electrical load and/or charging source, not shown.

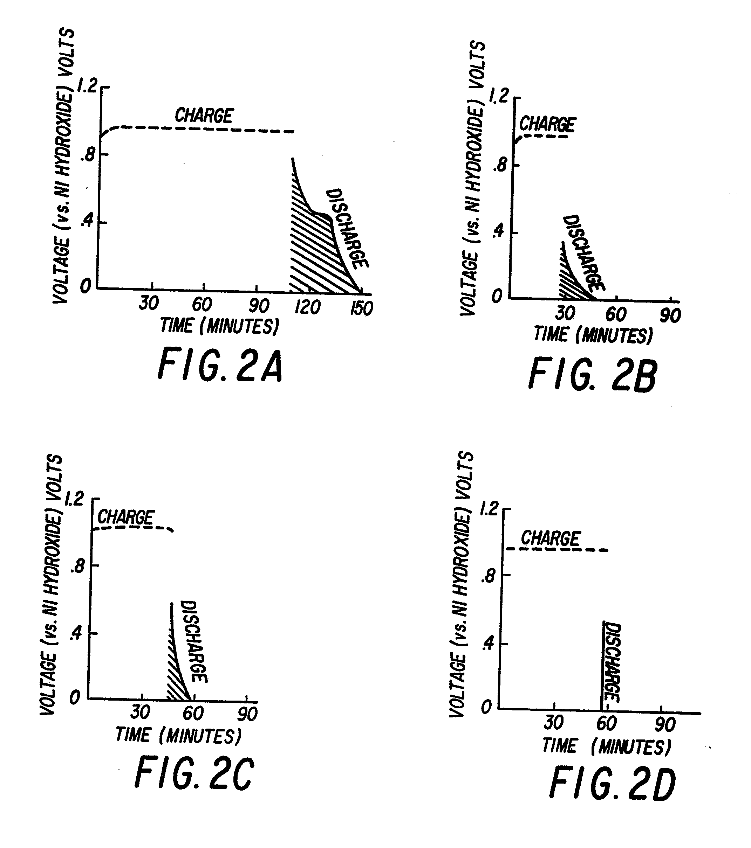

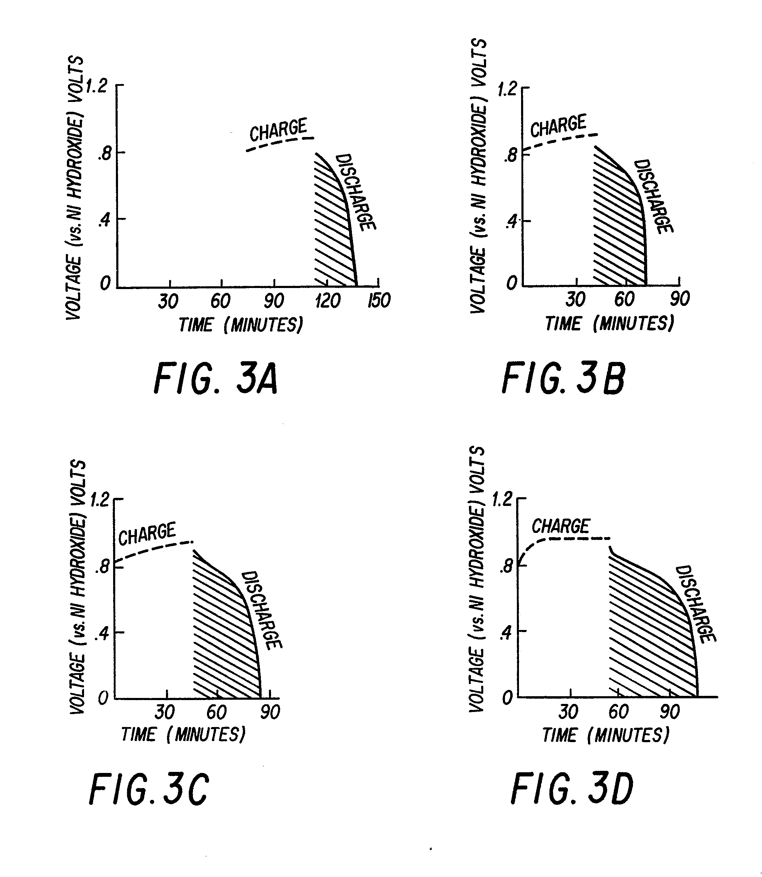

Figures 2A-D and 3A-D are discussed below in conjunction with the Examples.

## Examples

The following examples demonstrate the hydrogen storage ability of electrodes in an alkaline electrochemical environment. The electrode composition to be tested was disposed as the working electrode in an energy storage device as depicted in Figure 1. The energy storage device also utilized a counter electrode of nickel hydroxide and an electrolyte of 2N KOH. The device was run at 300°K.

Examples 1-5 are controls, utilizing a crystalline palladium electrode in Example 1 and amorphous metal alloy electrode materials not in conformance with the teaching of this invention as the hydrogen storage electrodes in Examples 2-5. Examples 6-14 incorporated an electrode as taught herein that comprised a layer of a substantially amorphous metal alloy hydrogen storage material as described herein on a substrate of titanium.

The amorphous metal alloy electrodes, both controls and those in accordance with the present invention, were prepared via RF sputtering in argon gas. A two-inch research S-gun, manufactured by Sputtered Films, Inc. was employed. As is known, DC sputtering can also be employed and achieve similar results. For each of the examples, a titanium substrate was positioned to receive the deposition of the sputtered amorphous alloy. The distance between the target and the substrate in each instance was approximately 10 centimeters. The amorphous alloy compositions sputtered onto the titanium substrate had thicknesses of from about 0.4 micron to about 1.0 micron. The composition of each alloy was verified by X-ray analysis and was also determined to be amorphous by X-ray analysis.

The hydrogen storage electrodes that were tested had an active surface area of about 1.5 $cm^2$. Each hydrogen electrode was cyclically charged at 1 mA until the cell voltage stabilized, and then discharged at about 0.1 mA. The efficiency of the hydrogen electrode for each example was then calculated in terms of the hydrogen to metal ratio (H/M) and a charge density measured both on a charge-per-weight basis (mA-hr/gm) and a charge-per-volume basis (mA-hr/$cm^3$). The results of these calculations are also shown in Table 1 below. Each composition was cycled at least ten times before the calculations of the H/M ratio and charge density were made.

TABLE 1

HYDROGEN STORAGE ABILITY OF VARIOUS AMORPHOUS METAL ELECTRODES UNDER ALKALINE CONDITIONS

| Example | Composition | Counter Electrode | Electrolyte | Hydrogen-to-Metal Ratio (H/M) | Charge Density (mA-hr/gm) | (mA-hr/cm³) |
|---------|-------------|-------------------|-------------|-------------------------------|---------------------------|-------------|
| 1 | crystalline Pd | graphite | 2N H$_2$SO$_4$ | 0.55 | 139 | 1668 |
| 2 | Ni$_{55}$Ti$_{45}$ | NiOH | 2N KOH | (a) | (a) | (a) |
| 3 | Ni$_{45}$Ti$_{55}$ | NiOH | 2N KOH | (a) | (a) | (a) |
| 4 | Ni$_{36}$Ti$_{64}$ | NiOH | 2N KOH | (a) | (a) | (a) |
| 5 | Ni$_{27}$Ti$_{73}$ | NiOH | 2N KOH | (a) | (a) | (a) |
| 6 | Pd$_5$Al$_5$Ni$_{14}$Ti$_{76}$ | NiOH | 2N KOH | 0.48 | 241(b) | 1301 |
| 7 | Pd$_{10}$Ni$_{14}$Ti$_{76}$ | NiOH | 2N KOH | 0.56 | 272(c) | 1597 |
| 8 | Pd$_5$Ni$_7$Ti$_{88}$ | NiOH | 2N KOH | 0.38 | 200 | 1036 |
| 9 | Pd$_9$Ni$_{27}$Ti$_{64}$ | NiOH | 2N KOH | 0.48 | 231 | 1469 |
| 10 | Pd$_5$Ni$_{14}$Ti$_{81}$ | NiOH | 2N KOH | 0.43 | 220 | 1208 |
| 11 | Ag$_5$Cu$_5$Ni$_{20}$Ti$_{70}$ | NiOH | 2N KOH | 0.59 | 290 | 1711 |
| 12 | Au$_{15}$Mo$_{15}$Ti$_{70}$ | NiOH | 2N KOH | 0.94 | 324 | 2430 |
| 13 | Pd$_{20}$Mo$_{30}$Ti$_{50}$ | NiOH | 2N KOH | 0.69 | 254 | 1956 |
| 14 | Pd$_5$Ni$_{25}$Mg$_{20}$Ti$_{50}$ | NiOH | 2N KOH | 0.59 | 321 | 1733 |

a - oxidizes in less than about 3 cycles
b - after 250 cycles
c - after 450 cycles

The foregoing examples demonstrate the use of the inventive electrodes to reversibly store hydrogen. In Example 1 a hydrogen storage electrode control material, crystalline palladium, was used in an electrolytic cell opposite a counter electrode of graphite and an electrolyte of 1N H$_2$SO$_4$. The efficiency of crystalline palladium was measured by a hydrogen-to-metal ratio of about 0.55 H/M and a charge density of about 139 mA-hr/gm based on weight and 1668 mA-hr/cm³ based on volume, and the crystalline palladium was seen to exhibit some corrosion.

In Examples 2-5, the hydrogen storage electrode material comprised amorphous Ni-Ti alloys. These amorphous metal alloy compositions are not in accordance with the present invention. Each of these hydrogen electrodes were disposed opposite a nickel hydroxide counter electrode and the electrolyte in the cells comprised 2N KOH. The efficiency of the control amorphous materials could not be measured as the material was severely oxidized after about three cycles, losing effectively all of its ability to retain a charge. Replacing a portion of the nickel component of the composition used in Example 4 with palladium produces an amorphous metal alloy composition in accordance with the present invention, such as Pd$_9$Ni$_{27}$Ti$_{64}$ used in Example 9. In this Example, the hydrogen storage electrode was also disposed opposite a nickel hydroxide counter electrode and disposed in an electrolyte of 6N KOH. The efficiency of Pd$_9$Ni$_{27}$Ti$_{64}$ as a

reversible hydrogen storage material over the course of at least 10 cycles was measured by a hydrogen-to-metal ratio of about 0.48 H/M and a charge density of about 231 mA-hr/gm by weight and about 1469 mA-hr/cm$^3$ by volume with no degradation due to oxidation.

Although several amorphous metal alloy compositions have been exemplified herein, it will readily be appreciated by those skilled in the art that other amorphous metal alloys falling within the scope of the compositions described herein as well-suited for reversibly stored hydrogen could be substituted therefore.

To more clearly demonstrate the combined characteristics of high energy density, deep discharge and resistance to passivation possessed by the electrodes disclosed herein, the charge/discharge characteristics of the electrodes used in Examples 5 and 9 are depicted in Figures 2A-D and 3A-D, respectively.

The electrode composition $Ni_{27}Ti_{73}$ used in Example 5, above was reported to have no measurable hydrogen-to-metal ratio or charge density after fewer than 10 charge/discharge cycles. Figure 2A is the charge/discharge curve for the first cycle of this electrode. It is seen that the electrode was charged at one mA to about one volt (vs. NaOH) and fully discharged at about 0.1 mA over a period of about 40 minutes. In Figure 2B, the second charge/discharge cycle for this electrode is depicted. The electrode was charged at about 1 mA to about one volt (vs. NaOH), but upon discharge rapidly fell to less than .4 Volts and was fully discharged in less than 20 minutes. In Figure 2C, the third cycle for this electrode is shown to have an even more severe discharge curve, and in Figure 2D it is seen that in the 29th cycle of this electrode, the electrode was unable to maintain any charge.

In contrast, an electrode in accordance with the present invention, having an amorphous metal alloy composition of approximately

$Pd_9Ni_{27}Ti_{64}$, is depicted in Figures 3A-D. In Figure 3A the first charge/discharge cycle of this electrode is depicted. The electrode was charged at about 1 mA to about 1 Volt (vs. NaOH) and showed a uniform discharge curve at about 0.1 mA over a period of about 30 minutes. In Figure 3B the second cycle of this electrode is shown and it is seen that the electrode was rapidly charged and discharged over an even longer period of time than the first cycle. Figures 3C and 3D depict the charge/discharge curves for this electrode during the third and twenty-ninth cycle, respectively. It is seen that the electrode continues to charge and discharge with no apparent decrease in energy storage ability.

The contrast between an energy storage device using a known amorphous hydrogen storage electrode and a hydrogen storage electrode and electrodes employed in the present invention can be varied within the scope of the total specification disclosure, neither the particular A, M or M' components nor the relative amounts of the components in the electrodes exemplified herein shall be construed as limitations of the invention.

Furthermore, while these electrodes were prepared by a sputtering technique which is a useful means for depositing the alloy onto a metal substrate such as titanium, it is to be understood that neither the process of sputtering nor the coating of substrates are to be construed as limitations of the present invention, in as much as hydrogen storage materials can be prepared and utilized by other processes and in other forms.

The reversible hydrogen storage ability of the amorphous metal alloy electrodes taught herein provide heretofor unattainable hydrogen storage ability resistance to oxidation and stability and so represent a substantial advancement to hydrogen storage and its ancilliary technologies and applications.

Thus, it is believed that any of the variables disclosed herein can readily be determined and controlled without departing from the spirit of the invention herein disclosed and described. Moreover, the scope of the invention shall include all modifications and variations that fall within the scope of the attached claims.

device in accordance with the present invention demonstrates the significant advantages of the electrodes and devices taught in this specification. The electrodes utilized in the energy storage devices in accordance with this invention may be charged and fully discharged through repeated cycles without adverse performance characteristics or any signs of corrosion or degradation due to passivation.

It is to be understood that the foregoing examples have been provided to enable those skilled in the art to have representative examples by which to evaluate the invention and that these examples should not be construed as any limitation on the scope of this invention. Inasmuch as the composition of the amorphous metal alloy

CLAIMS:

1.      An electrode for reversibly storing hydrogen in an alkaline-stable environment, comprising substantially amorphous metal alloy of the formual:

$$A_a M_b M'_c$$

wherein      A is at least one metal selected from the group consisting of Pd, Ag, Au, Hg and Pt;

M is at least one metal selected from the group consisting of Pb, Ru, Cu, Cr, Mo, Si, W, Ni, Al, Sn, Co, Fe, Zn, Cd, Ga and Mn;

M' is at least one of the elements selected from the group consisting of Ca, Mg, Ti, Y, Zr, Hf, V, Nb, Ta and the rare earths; and

wherein      a ranges from about 0.005 to about 0.80;

b ranges from zero to about 0.70; and

c ranges from about 0.08 to about 0.95.

2.      The electrode in accordance with Claim 1 wherein A is Pd, Ag or a combination thereof.

3.      The electrode in accordance with Claim 1 wherein M includes at least one of Mo, Ru, Ni and Mn.

4.      The electrode in accordance with Claim 1 wherein M' is titanium, magnesium, tantalum or a combination thereof.

5.      The electrode in accordance with Claim 1 wherein said electrode comprises said amorphous metal alloy disposed on a substrate.

6.    The electrode in accordance with Claim 1 wherein said electrode comprises a thin film of said amorphous metal alloy.

7.    The electrode in accordance with Claim 1 wherein said electrode comprises said amorphous metal alloy disposed in powder form.

8.    An energy storage device comprising:  a working electrode, a counter electrode, electrically isolated from said working electrode; and alkaline electrolyte in contact with the working electrode and the counter electrode, and means for collecting electrical current therefrom; the working electrode comprising a substantially amorphous metal alloy of the formual

$$A_a M_b M'_c$$

wherein    A is at least one metal selected from the group consisting of Pd, Ag, Au, Hg and Pt;

M is at least one metal selected from the group consisting of Pb, Ru, Cu, Cr, Mo, Si, W, Ni, Al, Sn, Co, Fe, Zn, Cd, Ga and Mn;

M' is at least one of the elements selected from the group consisting of Ca, Mg, Ti, Y, Zr, Hf, V, Nb, Ta and the rare earths; and

wherein    a ranges from about 0.005 to about 0.80;

b ranges from zero to about 0.70; and

c ranges from about 0.08 to about 0.95.

9.      The energy storage device in accordance with Claim
8 wherein said counter electrode is nickel hydroxide.


10.     The energy storage device in accordance with Claim
8 wherein said alkaline electrolyte is potassium
hydroxide.


11.     The energy storage device in accordance with Claim
8 wherein said alkaline electrolyte is sodium hydroxide.


12.     The energy storage device in accordance with Claim
8 wherein said working electrode is fully discharged in
operation.

1/3

*FIG. 1*

FIG. 2A

FIG. 2B

FIG. 2C

FIG. 2D

FIG. 3A

FIG. 3B

FIG. 3C

FIG. 3D